# EUROPEAN PATENT APPLICATION

(11) **EP 3 581 434 A1**
(43) Date of publication of application: **18.12.2019**
(21) Application number: 18382423.4
(22) Date of filing: 14.06.2018
(51) Int. Cl.: B60Q 3/14, B60Q 3/217, B60Q 3/60, B60Q 3/74

(54) **AUTOMOTIVE INTERIOR LIGHTING DEVICE AND METHOD OF MANUFACTURING**

(71) Applicant: Valeo Iluminacion, 23600 Martos (ES)
(72) Inventor: MAYOR, Raquel, 23600 Martos (ES); CONTRERAS, Antonio, 23600 Martos (ES); ALMAZAN, Miguel-Angel, 23600 Martos (ES)
(74) Representative: Valeo Vision

(57) **Abstract**

The invention provides an automotive interior lighting device (1) comprising a light source (2); and a non-opaque element (3). This non-opaque element (3) comprises a first face (31) oriented towards the light source (2) and a second face (32) intended to be visible. The non-opaque element (3) is divided into regions, wherein between two adjacent regions there is a non-derivable variation of thickness and wherein the second face has a derivable surface. The light source (2) is arranged to emit light towards the non-opaque element (3), in such a way that when the light source (2) does not emit light, the exterior appearance of the non-opaque element (3) is different from the exterior appearance of the non-opaque element (3) when the light source (2) emits light. The invention also provides a method of manufacturing such an interior lighting device (1).

## Description

### TECHNICAL FIELD

This invention is related to the field of providing interior lighting elements in automotive vehicles.

### STATE OF THE ART

Carmakers need to carefully design each piece of an automotive vehicle. Lighting not only affects to the headlamps and turning indicators, but also to interior lighting.

Interior lighting fulfils two main aims: first one is provide a way for a user to see the interior of the vehicle when exterior light is absent or very low. But second one is also to create a customized environment so that the first aim is accomplished in a particular way. Carmakers are facing some challenges in this field, since there is a growing trend to provide improvements in the final appearance of the interior elements of the vehicle.

As a consequence, there are elements to project light or holograms over a plastics surface, and then provide this three-dimensional effect. These elements are usually expensive and very sensitive to manufacturing and installation tolerances.

### DESCRIPTION OF THE INVENTION

The invention provides an alternative solution for such interior lighting devices by means of an automotive interior lighting device according to claim 1 and a method of manufacturing according to claim 8. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides an automotive interior lighting device comprising
a light source; and
a non-opaque element comprising a first face oriented towards the light source and a second face intended to be visible from a vehicle user when the interior lighting device is installed in an automotive vehicle, in such a way that the non-opaque element is intended to be between the user and the light source;
wherein the non-opaque element is divided into regions, wherein between two adjacent regions there is a non-derivable variation of thickness and wherein the second face has a derivable surface;
and wherein the light source is arranged to emit light towards the non-opaque element, in such a way that when the light source does not emit light, the exterior appearance of the non-opaque element is different from the exterior appearance of the non-opaque element when the light source emits light.

Since the non-opaque element is intended to be arranged between the light source and the user, and the basic operation principle is that different thicknesses of the non-opaque element are perceived as different colours by the user, the user perceives a pattern when the light source is turned on, while does not perceive anything relevant when the light source is turned off. Further, since the second face has a derivable surface and the thickness patter is performed on the first surface, the non-opaque element is easily integrated in an interior element of an automotive vehicle.

Such an interior lighting device is easy to manufacture and provides a three-dimensional effect with a simple light source, without the need of complex dynamic projection elements or holographic projections.

In some particular embodiments, each region has a thickness which is not constant. This allows the representation of fading-out figures and enriches the possibilities of expression.

In some particular embodiments, the second face is smooth. This smoothness should be understood in the sense that it has no visible sharpness, as the automotive parts that a person skilled in the art finds in the interior of an automotive vehicle, such as the dashboard or a visible door panel, which are manufactured with a smooth finish.

This smoothness suits perfectly with the rest of the elements found in a vehicle, so that when the light source does not emit light, this non-opaque element is perfectly integrated and non easily distinguishable among the rest of the vehicle parts.

In some particular embodiments, the second face is substantially flat.

A flat part may be preferred in some places where the rest of the parts are also flat, to achieve the aforementioned integration.

In some particular embodiments, the first face comprises a thickness profile across a cross section which contains straight lines.

These thickness profiles are easy to design and provide a colour fading effect with a simple and inexpensive manufacturing process.

In some particular embodiments, the thickness profile contains at least 5 non-derivable variations of thickness, and preferably at least 10 non-derivable variations of thickness, and preferably at least 20 non-derivable variations of thickness.

In these embodiments, more complex figures may be represented.

In some particular embodiments, the light source is a solid-state light source, and in particular a light emitting diode or LED.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the life span of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

In a further inventive aspect, the invention provides an automotive vehicle door comprising an interior lighting device according to the first inventive aspect.

In a further inventive aspect, the invention provides an automotive vehicle dashboard comprising an interior lighting device according to the first inventive aspect.

In a further inventive aspect, the invention provides a method of manufacturing an interior lighting device according to the first inventive aspect, the method comprising the steps of
providing an image with different colours;
assigning a layer thickness to each colour;
manufacturing a non-opaque element comprising a thickness pattern which corresponds with the colours of the image; and
providing a light source arranged to emit light towards the non-opaque element.

Such a method allows the expression of a complex image in a system which is easy to be manufactured and installed in an automotive vehicle.

In some particular embodiments, the step of manufacturing the non-opaque element comprises feeding a 3D printing machine with a file comprising the thickness pattern which corresponds with the colours of the image.

The 3D printing machine is a powerful tool to convert the colour range in a thickness pattern which is applied to the first face of the non-opaque element.

In a further inventive aspect, the invention provides an automotive interior lighting device manufactured by a method according to the previous inventive aspect.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows an exploded view of an automotive interior lighting device according to the invention.
Figure 2 shows an interior lighting device according to the invention installed in a vehicle.
Figure 3 shows a perspective lower view of an element of an automotive interior lighting device according to the invention.
Figure 4 shows a cross section of an element of an automotive interior lighting device according to the invention.
Figures 5a and 5b shows the perception that a user may have of an interior lighting device according to the invention when the light source is turned on and turned off.

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

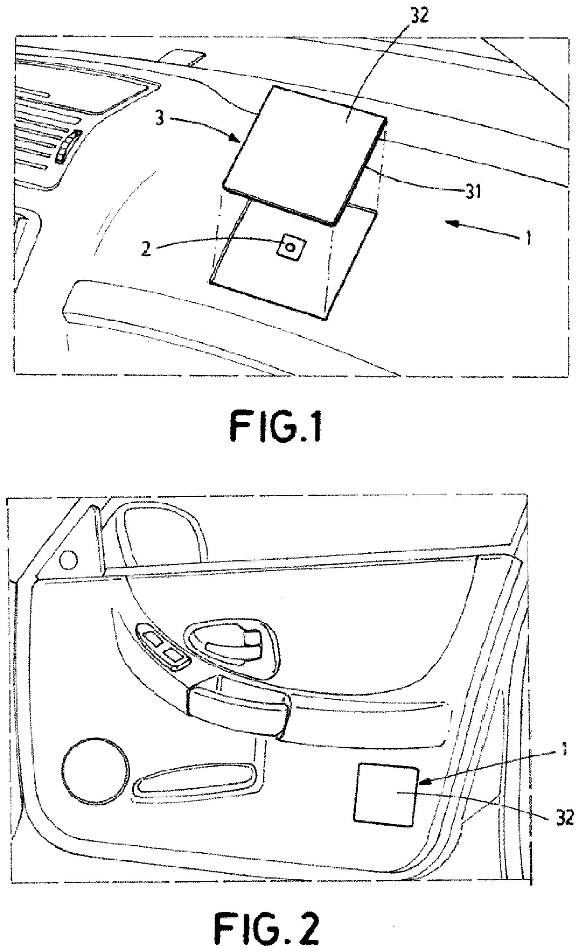

Figure 1 shows an exploded view of a basic installation scheme of an automotive interior lighting device for an automotive vehicle according to the invention. This interior lighting device 1 comprises a light source 2 and a non-opaque element 3.

The non-opaque element 3 comprises a first face 31 oriented towards the light source 2 and a second face 32 intended to be visible from a vehicle user when the interior lighting device is installed in an automotive vehicle. The non-opaque element is therefore intended to be between the user and the light source.

This non-opaque element has a thickness which is not constant. The thickness follows a thickness pattern which has been chosen so that when the light source is emitting light, the user perceives a texture. The light source is arranged to emit light towards the non-opaque element and, since the user is "behind" the non-opaque element, he perceives the light across the non-opaque element. The thickness pattern make the user perceive this texture.

When the light source does not emit light, the exterior appearance of the non-opaque element is completely standard, and the texture may not be identified. However, when the light source emits light, the exterior appearance of the non-opaque element is completely different, since the texture may be perceived.

Although this figure shows an exploded view, it shows how the non-opaque element is designed to be integrated in the rest of the automotive vehicle parts. This Figure 1 shows a car dashboard and Figure 2 shows an interior lighting device 1 according to the invention installed in a door panel.

In both figures, the second face 32 is smooth, in the sense of not having any sharp portions. In Figure 2, this second face 32 is substantially flat, but in Figure 1 this second face is curved. The shape which should be chosen for this second face 32 depends on the shape of the rest of the elements which surround the non-opaque element in installed conditions. To achieve a better integration, sometimes a flat shape will be chosen and sometimes a curved shape will be chosen. However, in both cases a smooth finish is chosen, since this smooth finish fits with the rest of the elements in the interior of an automotive vehicle.

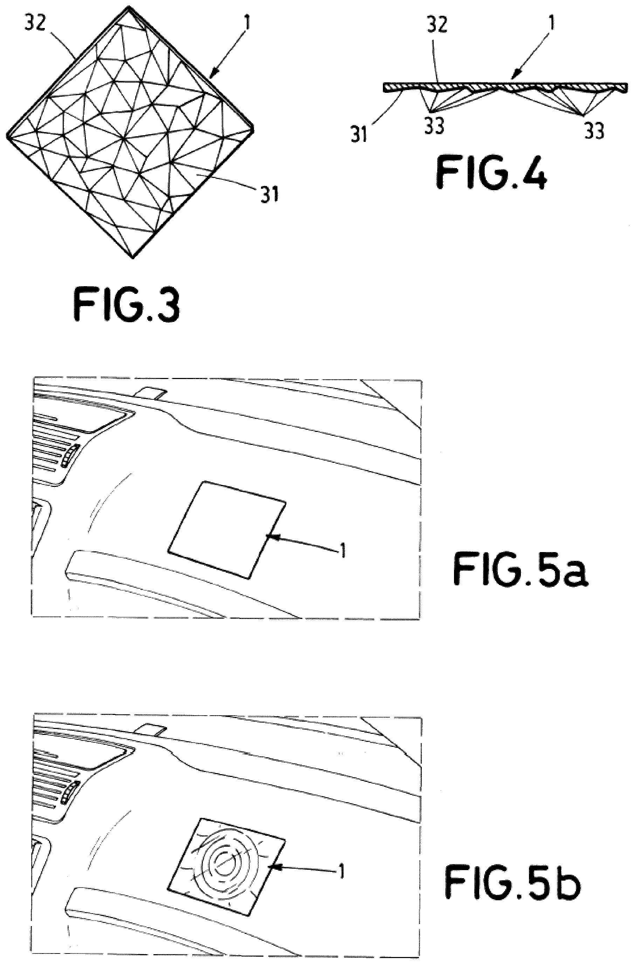

Figure 3 shows a perspective lower view of an element of an automotive interior lighting device according to the invention.

In this lower view, the thickness pattern of the first face 31 is observed. This thickness pattern is intended to provide a shape pattern when the non-opaque element is lit by the light source.

Figure 4 shows a cross section of an element of an automotive interior lighting device according to the invention.

This cross section shows an example of a thickness pattern. In this case, a sequence of straight lines with sharp cuts suggests the superimposition of several fading layers.

The non-opaque element 3 is divided into regions, wherein between two adjacent regions there is a non-derivable variation of thickness 33 and wherein the second face 32 has a derivable surface. Further, each region has a thickness which is not constant. In this case, the thickness profile contains 12 variations of thickness 33.

Figures 5a and 5b shows the perception that a user may have of an interior lighting device 1 according to the invention when the light source is turned on and turned off.

When the light source is turned off, as in Figure 5a, the user perceives a standard part, with no textures perceived from the outside. Since the outer surface of the non-opaque element is smooth, it may be even difficult to tell where this non-opaque element starts and ends.

However, when the light source is turned on, as in Figure 5b, the user perceives the texture caused by the thickness pattern.

To achieve this effect, a manufacturing method for an interior lighting device according to the invention comprises the steps of
providing an image with different colours;
assigning a layer thickness to each colour;
manufacturing a non-opaque element comprising a thickness pattern which corresponds with the colours of the image; and
providing a light source arranged to emit light towards the non-opaque element.

In a particular embodiment, the step of manufacturing the non-opaque element comprises feeding a 3D printing machine with a file comprising the thickness pattern which corresponds with the colours of the image.

## Claims

1. Automotive interior lighting device (1) comprising
a light source (2); and
a non-opaque element (3) comprising a first face (31) oriented towards the light source (2) and a second face (32) intended to be visible from a vehicle user when the interior lighting device (1) is installed in an automotive vehicle, in such a way that the non-opaque element (3) is intended to be between the user and the light source (2);
wherein the non-opaque element (3) is divided into regions, wherein between two adjacent regions there is a non-derivable variation of thickness and wherein the second face has a derivable surface;
and wherein the light source (2) is arranged to emit light towards the non-opaque element (3), in such a way that when the light source (2) does not emit light, the exterior appearance of the non-opaque element (3) is different from the exterior appearance of the non-opaque element (3) when the light source (2) emits light.

2. Automotive interior lighting device (1) according to claim 1, wherein each region has a thickness which is not constant.

3. Automotive interior lighting device (1) according to any of the preceding claims, wherein the second face (32) is smooth.

4. Automotive interior lighting device (1) according to any of the preceding claims, wherein the second face (32) is substantially flat.

5. Automotive interior lighting device (1) according to any of the preceding claims, wherein the first face (31) comprises a thickness profile across a cross section which contains straight lines.

6. Automotive interior lighting device (1) according to claim 5, wherein the thickness profile contains at least 5 non-derivable variations of thickness, and preferably at least 10 non-derivable variations of thickness, and preferably at least 20 non-derivable variations of thickness.

7. Automotive interior lighting device (1) according to any of the preceding claims, wherein the light source (2) is a solid-state light source, and in particular a light emitting diode or LED.

8. Automotive vehicle door comprising an interior lighting device (1) according to any of the preceding claims.

9. Automotive vehicle dashboard comprising an interior lighting device (1) according to any of claims 1 to 7.

10. Method of manufacturing an interior lighting device (1) according to any of claims 1 to 7, the method comprising the steps of
providing an image with different colours;
assigning a layer thickness to each colour;
manufacturing a non-opaque element comprising a thickness pattern which corresponds with the colours of the image; and
providing a light source arranged to emit light towards the non-opaque element.

11. Method according to claim 10, wherein the step of manufacturing the non-opaque element (3) comprises feeding a 3D printing machine with a file comprising the thickness pattern which corresponds with the colours of the image.

12. Automotive interior lighting device (1) manufactured by a method according to any of claims 10 or 11.
